Europäisches Patentamt

European Patent Office

Office européen des brevets

(19)

(11)     **EP 1 026 218 A1**

(12)                              **EUROPEAN PATENT APPLICATION**

(43) Date of publication:
**09.08.2000   Bulletin 2000/32**

(51) Int Cl.⁷: **C09J 163/00**, C09J 167/00,
C09J 7/02, C09J 7/00,
C09J 5/00

(21) Application number: **99200332.7**

(22) Date of filing: **05.02.1999**

(84) Designated Contracting States:
**AT BE CH CY DE DK ES FI FR GB GR IE IT LI LU
MC NL PT SE**
Designated Extension States:
**AL LT LV MK RO SI**

(71) Applicant: **MINNESOTA MINING AND
MANUFACTURING COMPANY**
**St. Paul, Minnesota 55133-3427 (US)**

(72) Inventors:
• **Welke, Siegfried, 3M laboratories, Europe GmbH
41453 Neuss (DE)**
• **Rieder-Otterburg, Suzanne,
3M Lab. Europe GmbH
41453 Neuss (DE)**
• **Lamon, Alain, 3M Technical Centre
92506 Rueil (FR)**
• **Bennett, Gregory S.,
Minessota Mining & Manuf. Co.
MN 55144-1000 (US)**

(74) Representative: **Voortmans, Gilbert J.L. et al
3M Europe S.A./N.V.
OIPC
Hermeslaan 7
1831 Diegem (BE)**

(54)     **UV-curable polyester/epoxy adhesive**

(57)     The present invention relates to a pressure sensitive adhesive tape comprising at least one pressure sensitive adhesive layer that is capable of being cured upon exposure to actinic radiation or electron beam radiation and comprises:

(i) an epoxy containing material;
(ii) an amorphous and branched polyester having a glass transition temperature of not more than 10°C;
(iii) and an effective amount of a photoinitiator when needed to initiate the curing.

According to a method provided by this invention, the pressure sensitive adhesive tape can be used to join two substrates and create assemblies with excellent mechanical properties.

EP 1 026 218 A1

**Description**

1. Field of the invention.

The present invention relates to a pressure-sensitive adhesive tape comprising at least one pressure sensitive adhesive layer which is optionally provided on a backing. The pressure-sensitive adhesive layer is capable of being cured upon exposure to actinic or electron beam (e-beam) radiation and comprises an epoxy compound and a polyester. The invention furthermore refers to a method of bonding a first substrate to a second substrate by using such pressure-sensitive adhesive tape and to the assembly prepared by such method.

2. Background of the invention.

Many adhesive compositions are known to adhere two substrates together, each particular adhesive having associated with it certain advantages and disadvantages. For example, pressure sensitive adhesives are known that have the capability of instantly adhering two substrates together by application of pressure. However, the strength of the adhesive bond finally obtained with such systems is limited. On the other hand, epoxy based adhesives are known that are capable of creating an extremely strong bond that also has a high heat resistance. However, epoxy based adhesives obtain this high strength only after a curing cycle which often involves heat and moreover the epoxy composition initially has little or no tackiness such that the substrates that are being linked together need to be clamped until a sufficiently strong bond is created upon curing.

The art has sought a solution for this problem and the use of epoxy/polyester based adhesives has been proposed that upon curing can create bonds of high strength. These adhesives generally do not require the use of clamps to hold the two substrates together during the curing, that is, they can be designed to exhibit an initial adhesive strength. Curing of the adhesive may be effected by exposure to actinic radiation or heat or a combination of both.

For example, US 4,920,182 describes UV-activatable curable compositions comprising one or more epoxy resins having an average of at least two 1,2-epoxy groups per molecule, one or more flexible polyesters which are terminated by, on average, at least two carboxyl groups and a metallocene complex initiator. The composition which can be used for the production of surface coatings on a variety of substrates or as adhesive, can be cured by application of heat or of a combination of irradiation and heat. The curing temperature is generally 40-200°C, preferably 80-110°C.

US 4,256,828 describes photopolymerizable compositions which contain epoxides, organic material with hydroxyl functionality such as hydroxyl-terminated polyesters and a photosensitive aromatic sulfonium or iodonium salt of a halogen-containing complex ion. The compositions can be used in a variety of applications, for example, as photocurable ink vehicles, binders for abrasive particles, paints, adhesives, coatings for lithographic and relief printing plates, protective coatings for metals, wood, etc. The compositions are typically coated onto the respective surface, and are photocurable at room temperature or below.

The curable hot melt compositions of EP 0,620,259 comprise an epoxy component, a polyester component, a photoinitiator and optionally a hydroxyl-containing material. The hot melt compositions which can be tacky or non-tacky, may be applied to a variety of substrates by extruding, spraying, gravure printing or coating (e.g. by using a coating die, a heated knife blade coater, a roll coater or a reverse roll coater). The hot melt composition may also be applied as an uncured, free standing adhesive film which when used to bond a first substrate, may be irradiated on one or both sides and then placed between two substrates by the use of heat, pressure or both heat and pressure to bond the film to the two substrates. Alternatively, it is possible to laminate the hot melt adhesive films to a backing at room temperature using a high pressure of, for example, 10 psi as is suggested in US 5,436,063. This reference describes a coated abrasive article comprising a backing, a first binder on the backing, a plurality of abrasive particles in the first binder and a second binder over the first binder and the abrasive particles. The first binder is a photocurable hot-melt adhesive as described in EP 0,620,259.

WO 98/38262 discloses a pressure sensitive adhesive tape comprising a pressure sensitive adhesive layer that includes an epoxy material in an amount of 20-70% by weight, an amorphous polyester compound in an amount of 30-80% by weight and optionally a hydroxyl functional compound in an amount of 0 to 50% by weight. The adhesive layer further includes a photoinitiator and can be cured upon exposure to actinic radiation or electron beam radiation.

Despite there being already many epoxy/polyester based adhesives known in the art, there continues to be a need to provide further epoxy/polyester based adhesives which may increase the usefulness and convenience in particular applications. For example, there is a desire to improve such properties as the overlap shear strength at room temperature and/or elevated temperature. It is furthermore desirable to improve the impact resistance of assemblies that are created with cured epoxy/polyester based adhesives and to decrease the amount of cold flow of the uncured adhesive tape. Preferably, these properties can be achieved by an adhesive tape that only requires an exposure to actinic radiation or electron beam radiation without the need for a pre- or post-heating step which may be a problem when bonding heat sensitive substrates together.

3. Summary of the invention

The present invention provides a pressure sensitive adhesive tape comprising at least one pressure sensitive adhesive layer, said pressure sensitive adhesive layer is capable of being cured upon exposure to actinic radiation or electron beam radiation and comprises:

(i) an epoxy containing material;
(ii) an amorphous and branched polyester having a glass transition temperature of not more than 10°C;
(iii) and an effective amount of a photoinitiator when needed to initiate the curing.

The pressure sensitive adhesive tape of the present invention has been found to be useful to create assemblies that exhibit a high overlap shear both at room temperature as well as at elevated temperature. Furthermore, the assemblies exhibit good impact resistance and some of the pressure sensitive adhesive tapes according to the invention have a reduced cold flow.

In connection with the present invention there is further provided a method of bonding a first substrate to a second substrate comprising the steps of:

(i) applying a first exposed surface of the pressure sensitive adhesive layer of the pressure sensitive adhesive tape as defined above to the first substrate,
(ii) attaching the second substrate to a second exposed surface of the pressure sensitive adhesive layer and
(iii) exposing the pressure sensitive adhesive layer to actinic radiation or electron beam radiation.

This invention also provides a pressure sensitive adhesive capable of being cured upon exposure to actinic radiation or electron beam radiation and comprises:

(i) an epoxy containing material;
(ii) an amorphous and branched polyester having a glass transition temperature of not more than 10°C;
(iii) and an effective amount of a photoinitiator when needed to initiate the curing.

Further, the present invention provides an assembly comprising a first substrate bonded to a second substrate with a cured product of a composition comprising an epoxy material and an amorphous and branched polyester, the assembly having a dynamic overlap shear strength at 23°C of at least 6 MPa and at least 1 MPa at 85°C and said assembly further having an impact test value of at least 3.5 kJ/m$^2$.

The glass transition temperature (Tg) is determined by differential scanning calorimetry according to the DIN 53765 standard, dynamic overlap shear strength and impact test values are obtained as set forth in the examples hereinafter.

4. Detailed description of the invention.

By the term "capable of being cured upon exposure" is meant that the pressure-sensitive adhesive composition can be activated as a result of the exposure, i.e. the curing reaction can be initiated as a result of the exposure to actinic radiation or e-beam radiation and the curing reaction will continue subsequent to the exposure. The curing reaction in connection with this invention will typically comprise polymerization and/or cross-linking reactions.

The term pressure-sensitive adhesive tape as referred to above and below describes supported or unsupported, essentially two-dimensional articles such as sheets, stripes, ribbons or die-cut parts (i.e. the extension of the articles in two directions distinctly exceed the extension in the third direction) which are tacky at room temperature and can be applied to a wide variety of substrates by exerting, for example, finger pressure, and that preferably can be conveniently handled at lower temperatures such as room temperature without breaking, i.e. which exhibit a sufficiently high internal strength and cohesivity and a certain elasticity so that the liners can easily be stripped off from the tape without damaging it, and the tape can at least be slightly stretched and transferred to the substrate by hand. The pressure-sensitive adhesive tape of the present invention should normally have a 90° peel adhesion, measured according to the method set forth in the examples, of at least 4N/12.7mm, preferably at least 7N/12.7mm.

The epoxy/polyester based pressure-sensitive adhesive tapes according to the present invention are curable and can be converted to cured pressure-sensitive adhesive tapes upon exposure to actinic or e-beam irradiation. The cured pressure-sensitive adhesive may bond, for example, two substrates, and the resulting configuration is termed as an assembly.

It was found that by including an amorphous and branched polyester having a Tg of not more than 10°C and preferably not more than 5°C, in the epoxy/polyester based pressure sensitive adhesive layer, the assemblies created therewith have high dynamic overlap shear strengths at room temperature as well as at elevated temperatures of as high as 85°C. Furthermore, such assemblies can be achieved by curing the pressure sensitive adhesive layer solely by exposure to actinic radiation or electron beam radiation without the need for a heating step.

The amorphous and branched polyester component used in the pressure sensitive adhesive layer is differentiated from crystalline polyesters in that the amorphous and branched polyester does not display a measurable crystalline melting behaviour when a sample of 8mg is subjected to a Differential Scanning Calorimetry scan at a rate of 20°C per minute from -60°C to 200°C. The DSC measurement is conveniently performed using commercially available DSC equipment such as for example a DSC7 differential scanning calorimeter from Perkin Elmer, Norwalk, CT, USA.

While not displaying a melting behaviour, the amorphous and branched polyester when being subjected to a DSC scan, displays a glass transition. The temperature of the glass transition of the amorphous and branched polyester should not be more than 10°C and is preferably in the range of -20°C to 5°C and most preferably between -10°C and 5°C.

The amorphous polyester component used in the pressure sensitive tape of this invention includes hydroxyl and carboxyl terminated polyesters. The softening point of the amorphous and branched polyester is typically between 50°C and 150°C, more preferably between 70 and 140°C, and most preferably between 60 and 110°C. The molecular weight is preferably adjusted to give a melt flow rate at 200°C of between 10 and 300 g/10min and more preferably between 20 and 250 g/10min. The melt flow rate is measured according to DIN ISO 1133 by placing approximately 10g of the respective amorphous and branched polyester compound in a temperature-conditioned metal cylinder. Via a cylindrical die, a force of 21.6 N acts on the melted sample. The amount of sample which flows through a standardized nozzle within a certain time is weighed and is converted to a flow time given in g/min. Preferred amorphous and branched polyesters also have a number average molecular weight of about 5000 to 200,000 and more preferably from about 6,500 to about 50,000 as determined by GPC (gel permeation chromatography) in chloroform calibrated with polystyrene standards.

The amorphous and branched polyester can be prepared according to procedures well known in the art by reacting a diol, a dicarboxylic acid or a diester equivalent and, to obtain branching, a polyol having a functionality of three or more and/or a polycarboxylic acid having a functionality of three or more. The condensation reaction in the presence of these polyols and/or polycarboxylic acids having a functionality of three or more is carried out under conditions and using stoichiometric ratios such that substantial gel formation is prevented and desired branching of the polyester is obtained.

The dicarboxylic acid may for example be aliphatic, cycloaliphatic or aromatic. Examples of aliphatic dicarboxylic acids are saturated aliphatic dicarboxylic acids, such as oxalic acid, malonic acid, succinic acid, $\alpha$-methylsuccinic acid, glutaric acid, adipic acid, pimelic acid, azelaic acid, sebacic acid or dimerized linoleic acid; or unsaturated aliphatic polycarboxylic acids, such as maleic acid, fumaric acid, mesaconic acid, citraconic acid, glutaconic acid or itaconic acid, and also possible anhydrides of these acids.

Examples of cycloaliphatic dicarboxylic acids are hexahydrophthalic, hexahydroisophthalic or hexahydroterephthalic acid, tetrahydrophthalic, tetrahydroisophthalic or tetrahydroterephthalic acid or 4-methyltetrahydrophthalic acid, 4-methylhexahydrophthalic acid or endomethylenetetrahydrophthalic acid.

Examples of aromatic dicarboxylic acids are phthalic, isophthalic and terephthalic acid.

Examples of polyfunctional carboxylic acids included aromatic polyfunctional carboxylic acids and include for example aromatic tricarboxylic or tetracarboxylic acids, such as trimellitic acid, trimesic acid, pyromellitic acid or benzophenonetetracarboxylic acid; or trimerized fatty acids or mixtures of dimerized and trimerized fatty acids, such as are available commercially, for example, under the trade name Pripol™.

Suitable diols include for example aliphatic and cycloaliphatic diols. Examples of suitable aliphatic diols are $\alpha,\omega$-alkylenediols, such as ethylene glycol, propane-1,2-diol, propane-1,3-diol, butane-1,4-diol, pentane-1,5-diol, neopentyl glycol, hexane-1,6-diol, octane-1,8-diol, decane-1,10-diol or dodecane-1,12-diol.

Examples of suitable cycloaliphatic diols are 1,3-dihydroxycyclohexane,1,4-dihydroxycyclohexane, 1,4-cyclohexanedimethanol, bis-4-(hydroxycyclohexyl)-methane or 2,2-bis-(4-hydroxycyclohexyl)-propane.

Examples of suitable polyfunctional alcohols are 1,1,1-trimethylolethane, 1,1,1-trimethylolpropane, glycerol or pentaerythritol.

Long chain diols including poly (oxyalkylene) glycols in which the alkylene group preferably contains from 2 to 9 carbon atoms (more preferably from 2 to 4 carbon atoms) may also be used.

Reacting, for example, the dicarboxylic acids (or their diester equivalents) and the diols, polycarboxylic acids and/or polyols enumerated above may result in amorphous and/or crystalline polyesters. Amorphous polyester compounds can be easily identified by subjecting them to a DSC scan as was described above. Amorphous rather than crystalline polyester compounds can be obtained, for example, by reacting educts with a high degree of stereo-irregularity which cannot effectively pack into crystalline structures and impart a high degree of entropy to the resulting polymer. Details on the preparation of amorphous polymers can be found, for example, in Encyclopedia of Polymer Science and Engineering, New York 1988, vol. 12, pp. 1-312 and the references cited therein, and in the Polymeric Materials Encyclopedia, Boca Raton 1996, vol. 8, pp. 5887-5909 and the references cited therein.

The amount of amorphous and branched polyester in the pressure sensitive adhesive layer of the pressure sensitive adhesive tape is typically between 10 and 80% by weight of the total weight of the pressure sensitive adhesive layer and preferably 15 to 75% by weight. In addition to the amorphous and branched polyester, the pressure sensitive adhesive layer may also contain other polyester components such as crystalline and/or linear polyester components. However, it is preferred that the amount of crystalline polyester components added to composition is small and most preferably, the pressure sensitive adhesive layer is substantially free of crystalline polyester components. Further, the pressure sensitive adhesive layer may include a mixture of various amorphous and branched polyesters. Also, a mixture of amorphous and linear polyesters with amorphous and branched polyesters can be used.

The pressure-sensitive adhesive used for the preparation of the pressure-sensitive adhesive tapes according to the invention further comprises an epoxy containing material containing one or more organic compounds having an oxirane ring polymerizable by ring opening. Such compounds, broadly called epoxides, include monomeric epoxy compounds and epoxides of the polymeric type and can be aliphatic, cycloaliphatic, aromatic or heterocyclic. Monomeric and oligomeric epoxy compounds preferably have at least two and more, preferably two to four, polymerizable epoxy groups per molecule. In polymeric type epoxides or epoxy resins, there may be many pendent epoxy groups (e.g., a glycidyl methacrylate polymer could have several thousand pendent epoxy groups per average molecular weight). Oligomeric epoxides and, in particular, polymeric epoxy resins are preferred.

The molecular weight of the epoxy-containing materials may vary from low molecular weight monomeric or oligomeric materials with a molecular weight, e.g., from about 100 to polymeric resins with a molecular weight of about 50000 or more and may vary greatly in the nature of their backbone and substituent groups. For example, the backbone may be of any type, and substituent groups thereon can be any group not having a nucleophilic group or electrophilic group (such as an active hydrogen atom) which is reactive with an oxirane ring. Illustrative of permissible substituent groups are halogens, ester groups, ethers, sulfonate groups, siloxane groups, nitro groups, amide groups, nitrile groups, phosphate groups, etc. Mixtures of various epoxy-containing compounds can also be used in the epoxy part of the pressure sensitive adhesive composition of this invention. The epoxy containing material preferably comprises a mixture of two or more epoxy resins in order to modify and adapt the mechanical properties of the cured adhesive with respect to specific requirements.

The term "epoxy resin" is used herein to mean any of dimeric, oligomeric or polymeric epoxy materials containing a plurality, i.e. at least 2, of epoxy functional groups. Types of epoxy resins that can be used include, for example, the reaction product of bisphenol A and epichlorohydrin, the reaction product of phenol and formaldehyde (novolac resin) and epichlorohydrin, peracid epoxies, glycidyl esters, the reaction product of epichlorohydrin and p-amino phenol, the reaction product of epichlorohydrin and glyoxal tetraphenol and the like.

Suitable commercially available diglycidyl ethers of bisphenol-A are Ciba Geigy Araldite ™ 6010, Dow Chemical DER ™ 331, and Shell Chemical Epon™ 825, 828, 826, 830, 834, 836, 1001, 1004, 1007, etc.

A polyepoxidized phenol formaldehyde novolac prepolymer is available from Dow Chemical as DEN™ 431 and 438 and from Ciba Geigy as CY-281™, and a polyepoxidized cresol formaldehyde novolac prepolymer is available from Ciba Geigy as ECN™ 1285, 1280 and 1299.

A polyglycidyl ether of polyhydric alcohol is available from Ciba Geigy, based on butane-1,4-diol, as Araldite ™ RD-2; and from Shell Chemical Corporation based on glycerine, as Epon ™ 812.

Suitable commercially available flexible epoxy resins include polyglycol diepoxies, DER ™ 732 and 736, from Dow Chemical Company, diglycidyl ester of linoleic dimer acid, Epon ™ 871 and 872 from Shell Chemical Company, diglycidyl ester of a bisphenol in which the aromatic rings are linked by a long aliphatic chain, Lekutherm ™ X-80, from Mobay Chemical Company, epoxidized synthetic rubber materials which are available from Shell Chemical Corporation and epoxidized natural rubber materials such as ENR-10, ENR-25 and ENR-50 which are available from the Rubber Research Institute of Malaysia. The ENR materials are described in Encyclopedia of Polymer Science and Engineering, New York 1988, vol. 14, p. 769.

Additional epoxy resins having at least 2 and preferably more than 2 epoxy groups include, for example, a solid epoxy novolac resin, DEN ™ 485 from Dow Chemical Company, a tetrafunctional solid epoxy resin, Epon ™ 1031 from Shell Chemical Company, and N,N,N',N'-tetraglycidyl-4,4'-methylenebisbenzenamine, Araldite ™ MY 720 from Ciba Corporation, a solid resin, N,N,N',N',-tetraglycidyl-$\alpha,\alpha'$-bis(4-aminophenyl)-p-diisopropylbenzene, HPT ™ 1071 from Shell Company, solid diglycidyl ether of bisphenol-9-fluorene, HPT ™ 1079 from Shell Chemical Company, and triglycidylether of paraaminophenol, Araldite ™ 0500/0510 from Ciba-Geigy Corporation.

Useful cycloaliphatic epoxy resins include, for example, vinylcyclohexane dioxide which is commercially available as ERL-4206 from Union Carbide Corp., 3,4-epoxycyclohexylmethyl-3,4-epoxycyclohexane carboxylate commercially available as ERL-4221 from Union Carbide Corp., 3,4-epoxy-6-methylcyclohexylmethyl-3,4-epoxy-6-methylcyclohexane carboxylate commercially available as ERL-4201 from Union Carbide Corp., bis(3,4-epoxy-6-methylcyclohexylmethyl)adipate commercially available as ERL-4289 from Union Carbide Corp. or bis(2,3-epoxycyclopentyl)ether commercially available as ERL-0400 from Union Carbide Corp.

The epoxy containing material is typically present in an amount of 20 to 70% by weight of the total weight of the pressure sensitive adhesive layer.

The pressure-sensitive adhesive used for the preparation of the pressure-sensitive adhesive tapes according to the present invention furthermore comprises one or more photoinitiator compounds unless the curing of the pressure sensitive adhesive can be effected without the aid of a photoinitiator. For example, when the composition is exposed to e-beam it may not be necessary to include a photoinitiator. However, when the composition is to be exposed by UV or visible light, it will usually be required that the pressure sensitive adhesive composition includes a photoinitiator. The curing is preferably performed at room temperature or below but may also be performed at higher temperatures, but preferably lower than the melting temperature of the pressure-sensitive adhesive tape.

The curing is preferably performed as cationic polymerization, and the photoinitiators are preferably selected from a group consisting of metallocene salts and aromatic onium salts.

Suitable salts of organometallic complex cations (or metallocene salts) include but are not limited to, those salts having the following formula (I)

$$[(L^1XL^2)M^p]^qY_n \qquad (I)$$

wherein

$M^p$ represents a metal ion selected from the group consisting of Cr, Mo, W, Mn, Re, Fe and Co with $p$ denoting the charge of the metal ion;

$L^1$ represents 1 or 2 ligands contributing pi-electrons that can be the same or different ligand selected from the group of: substituted and unsubstituted $\eta^3$-allyl, $\eta^5$-cyclopentadienyl, and $\eta^7$-cycloheptatrienyl, and $\eta^6$-aromatic compounds selected from $\eta^6$-benzene and substituted $\eta^6$-benzene compounds and compounds having 2 to 4 fused rings, each capable of contributing 3 to 8 pi-electrons to the valence shell of $M^p$;

$L^2$ represents none, or 1 to 3 ligands contributing an even number of sigma-electrons that can be the same or different ligand selected from the group of: carbon monoxide, nitrosonium, triphenyl phosphine, triphenyl stibine and derivatives of phosphorus, arsenic and antimony, with the proviso that the total electronic charge contributed to $M^p$ results in a net residual positive charge of q to the complex;

q is an integer having a value of 1 or 2, the residual charge of the complex cation ;

Y is halogen-containing complex anion selected from $BF_4^-$, $AsF_6^-$, $PF_6^-$, $SbF_5OH^-$, $SbF_6^-$, and $CF_3SO_3^-$; and

n is an integer having a value of 1 and 2, the number of complex anions required to neutralize the charge q on the complex cation.

Preferred examples of suitable salts of organometallic complex which are cations useful in the pressure-sensitive adhesive tape of the invention include the following:

($\eta^6$-benzene)($\eta^5$-cyclopentadienyl)iron(+)hexafluoroantimonate
($\eta^6$-toluene)($\eta^5$-cyclopentadienyl)iron(1+)hexafluoroarsenate
($\eta^6$-cumene)($\eta^5$-cyclopentadienyl)iron(1+)hexaflurorphosphate
($\eta^6$-p-xylene)($\eta^5$-cyclopentadienyl)iron(1+)hexafluoroantimonate
($\eta^6$-xylenes)(mixed isomers)($\eta^5$-cyclopentadienyl)iron(1+)hexafluorophosphate
($\eta^6$-o-xylene)($\eta^5$-cyclopentadienyl)iron(1+)triflate
($\eta^6$-m-xylene)($\eta^5$-cyclopentadienyl)iron(1+)tetrafluoroborate
($\eta^6$-mesitylene)($\eta^5$-cyclopentadienyl)iron(1+)hexafluoroantimonate
($\eta^6$-hexamethylbenzene)($\eta^5$-cyclopentadienyl-)iron(1-)pentafluorohydroxyantimonate
($\eta^6$-naphthalene)($\eta^5$-cyclopentadienyl)iron(1+)tetrafluoroborate
($\eta^6$-pyrene)($\eta^5$-cyclopentadienyl)iron(1+)triflate
($\eta^6$-toluene)($\eta^5$-cyclopentadienyl)iron(1+)hexafluoroantimonate
($\eta^6$-cumene)($\eta^5$-cyclopentadienyl)iron(1+)hexafluoroantimonate
($\eta^6$-p-xylene)($\eta^5$-cyclopentadienyl)iron(1+)hexafluoroantimonate
($\eta^6$-m-xylene)($\eta^5$-cyclopentadienyl)iron(1+)hexafluoroantimonate
($\eta^6$-hexamethylbenzene)($\eta^5$-cyclopentadienyl-)iron(1+)hexafluoroantimonate
($\eta^6$-naphthalene)($\eta^5$-cyclopentadienyl)iron(1+)hexafluoroantimonate
($\eta^6$-pyrene)($\eta^5$-cyclopentadienyl)iron(1+)hexafluoroantimonate
($\eta^6$-chrysene)($\eta^5$-cyclopentadienyl)iron(1+)hexafluoroantimonate

($\eta^6$-perylene)($\eta^5$-cyclopentadienyl)iron(1+)hexafluoroantimonate
($\eta^6$-chrysene)($\eta^5$-cyclopentadienyl)iron(1+)pentafluorohydroxyantimonate
($\eta^6$-acetophenone)($\eta^5$-methylcyclopentadienyl-)iron(1+) hexafluoroantimonate
($\eta^6$-fluorene)($\eta^5$-cyclopentadienyl)iron(1+)hexafluoroantimonate

Metallocene salts of formula I and their preparation are described, for example, in US 5,089,536, US 5,059,701 and EP 0,109,851. The metallocene salts may be used in conjunction with a reaction accelerator such as an oxalate ester of a tertiary alcohol.

Also preferred are aromatic onium salts which are disclosed, for example in U.S. 4,069,054, 4,231,951 and 4,250,203. Such salts can be described by the formula:

$$AX \hspace{8cm} (II)$$

wherein

A is an organic cation selected from those described in U.S. Pat. Nos. 3,708,296, 3,729,313, 3,741,769, 3,794,576, 3,808,006, 4,026,705, 4,058,401, 4,069,055, 4,101,513, 4,216,288, 4,394,403, and 4,623,676, all incorporated herein by reference, and

X is an anion where X is defined as Y in formula (I) above.

A is preferably selected from diazonium, iodonium, and sulfonium cations and more preferably from diphenyliodonium, triphenylsulfonium and phenylthiophenyl diphenylsulfonium. X preferably is selected from the group of anions consisting of $CF_3SO_3{}^-$, $BF_4{}^-$, $PF_6{}^-$, $SbF_6{}^-$, $SbF_6OH^-$, $AsF_6{}^-$, and $SbCl_6{}^-$.

Aromatic iodonium salts and aromatic sulfonium salts are preferred. Especially preferred aromatic iodonium and aromatic sulfonium salts are described in EP 0,620,259, p. 5, ln. 17 to p. 6, ln. 29.

Useful commercially available cationic photoinitiators include UVOX™ UVI-6974, an aromatic sulfonium complex salt (Union Carbide Corp.), and IRGACURE™ 261, a metallocene complex salt (Ciba-Geigy).

The amount of photoinitiator relative to the total weight of the pressure sensitive adhesive layer is generally between 0.01 and 5 % by weight and preferably between 0.1 and 2% by weight.

In a preferred embodiment of the present invention, the pressure sensitive adhesive layer also includes a hydroxy functional material. By the term hydroxy functional material is meant a composition comprising one or more compounds that have at least one and preferably at least two hydroxy groups. The term hydroxy functional material does not include the amorphous and branched polyester having a Tg of not more than 10°C and which is generally also hydroxy funtionalized. The hydroxyl-containing compounds should be substantially free of other "active hydrogen" containing groups such as amino and mercapto moieties. The hydroxyl-containing compounds should also be substantially free of groups which may be thermally and/or photolytically unstable so that the compounds will not decompose or liberate volatile components when exposed to e-beam or actinic radiation and, optionally, to heating during curing. Preferably the compounds contain two or more primary or secondary aliphatic hydroxyl groups (i.e., the hydroxyl group is bonded directly to a non-aromatic carbon atom). The hydroxyl group may be terminally situated, or may be pendent from a polymer or copolymer. The number average equivalent weight of the hydroxyl-containing material is preferably about 31 to 2500, more preferably about 80 to 1000, and most preferably about 80 to 350.

The hydroxyl number which can be defined by the equation:

$$OH = \frac{56.1 \times 1000 \times f}{m.w.}$$

wherein

OH = hydroxyl number of the hydroxyl functional compound;

$f$ = functionality, that is, average of hydroxyl groups per molecule of hydroxyl functional compound; and

m.w. = molecular weight of the hydroxyl functional compound (number average).

Illustrative examples of hydroxyl-containing materials include both monomeric and polymeric compounds. Monomeric hydroxyl-functional compounds comprise, for example, such as ethylene glycol, propylene glycol, 1,3-dihydroxypropane, 1,3-Illustrative examples of hydroxyl-containing materials include both monomeric and polymeric compounds. Monomeric hydroxyl-functional compounds comprise, for example, such as ethylene glycol, propylene glycol, 1,3-dihydroxypropane, 1,3-dihydroxybutane, 1,4-dihydroxybutane, 1,4-, 1,5-, and 1,6-dihydroxyhexane, 1,2-, 1,3-, 1,4-, 1,6-, and 1,8-dihydroxyoctane, 1,10-dihydroxyhexane, 1,1,1-trimethylolethane, 1,1,1-trimethylolpropane, pentaerythritol, polycaprolactone, xylitol, arabitol, sorbitol or mannitol. Suitable examples of polymeric hydroxyl-functional compounds comprise, for example, polyoxyalkylene polyols (e.g., polyoxyethylene and polyoxypropylene glycols and triols of equivalent weight of 31 to 2500 for the diols or 80 to 350 for triols), polytetramethylene oxide glycols of varying molecular weight and hydroxyl-terminated polyacetones.

Useful commercially available hydroxyl-containing materials include the POLYMEG™ series (available from QO Chemicals, Inc.) of polytetramethylene oxide glycols such as POLYMEG™ 650, 1000 and 2000; the TERATHANE™ series (from E.I. duPont de Nemours and Company) of polytetramethylene oxide glycols such as TERATHANE™ 650, 1000 and 2000; POLYTHF™, a polytetramethylene oxide glycol from BASF Corp.; the BUTVAR™ series (available from Monsanto Chemical Company) of polyvinylacetal resins such as BUTVAR™ B-72A, B-73, B-76, B-90 and B-98; the TONE™ series (available from Union Carbide) of polycaprolactone polyols such as TONE™ 0200, 0210, 0230, 0240, and 0260; the DESMOPHEN™ series (available from Miles Inc.) of saturated polyester polyols such as DESMOPHEN™ 2000, 2500, 2501, 2001KS, 2502, 2505, 1700, 1800, and 2504; VORANOL™ 234-630 (a trimethylol propane) from Dow Chemical Company; VORANOL™ 230-238 (a glycerol polypropylene oxide adduct) from Dow Chemical Company; the SYNFAC™ series (from Milliken Chemical) of polyoxyalkylated bisphenol A's such as SYNFAC™ 8009, 773240, 8024, 8027, 8026, and 8031; and the ARCOL™ series (from Arco Chemical Co.) of polyoxypropylene polyols such as ARCOL™ 425, 1025, 2025, 42, 112, 168, and 240; and bisphenol-A extended polyols such as SIMULSOL™ BPHE, BPIE, BPJE, BPLE, BPNE, BPRE, BPHP, BPIP, BPRP and BPUP from Seppic, Paris, France.

A particularly useful class of hydroxy containing compounds are the polyoxyalkylene polyols. Examples thereof include polyoxyethylene and polyoxypropylene glycols and polyoxyethylene and polyoxypropylene triols as well as polytetramethylene oxide glycols and polyoxyalkylated bisphenol A's. The polyoxyalkylene polyols are particularly suitable for retarding the curing reaction so that the open time of the pressure sensitive adhesive can be increased. By the term "open time" in connection with this invention is meant the period of time after the composition has been irradiated, it remains sufficiently uncured for a second substrate to be bonded thereto and to achieve an overlap shear strength of the assembly at 23°C of at least 6 MPa and at least 1 MPa at 85°C. The open time of the pressure sensitive tape in accordance with this invention that can be cured upon exposure to UV-A radiation is preferably at least 2 minutes after exposure to an energy dose of 1640mJ/cm$^2$ of UV-A radiation. However, if one or both substrates that are being bonded together are translucent for the radiation to which the pressure sensitive adhesive layer is to be exposed, the open time is of no relevance because in that case the exposure to the radiation can be effected through the translucent substrate after both substrates have been attached to each other by the pressure sensitive adhesive tape. Only in case both substrates of the assembly are opaque for the exposing radiation will it be necessary to expose the pressure sensitive adhesive layer to the radiation prior to attaching the second substrate thereto. In this case, an open time of at least 2 minutes is desirable to allow for suitable workability of the pressure sensitive adhesive.

Another preferred class of hydroxy containing compounds for use in this invention are hydroxy containing phenoxy resins. Particularly preferred phenoxy resins are those that are derived from the polymerization of a di-glycidyl bisphenol compound. Typically, the phenoxy resin has a number average molecular weight of less than 50000, preferably in the range of 10000 to 20000. Phenoxy resins that can be used in connection with this invention are commercially available and include PAPHEN™ PKHP-200 available from Phenoxy Associates, Rock Hill SC, USA. It has been found in connection with this invention that the addition of phenoxy resin to the pressure sensitive adhesive composition may improve the dynamic overlap shear strength, decrease the cold flow and/or improve the impact resistance.

In a preferred embodiment in connection with the present invention, the pressure sensitive adhesive comprises between 20 and 70 parts by weight of the epoxy compound, 10 to 75 parts by weight of the amorphous and branched polyester having Tg of not more than 10°C and 5 to 50 parts by weight of a hydroxy functional material. The total sum of these three components should be 100 parts by weight. If the pressure sensitive adhesive tape is to be used in an application where the pressure sensitive adhesive is irradiated prior to being adhered to one or both substrates, it is especially preferred that for 100 parts by weight of the total mass of the three components, the pressure sensitive adhesive layer includes at least 8 parts by weight of a polyoxyalkylene polyol. Thus in such case, a preferred composition contains 20 to 70 parts by weight of the epoxy compound, 10 to 72 parts by weight of the amorphous and branched polyester and 8 to 50 parts by weight of the hydroxy functional material of which at least 8 and preferably at least 10 parts by weight is or are polyoxyalkylene polyols.

In a further preferred embodiment the hydroxy functional material comprises between 5 and 30 parts by weight of a hydroxy functional phenoxy resin as described above and optionally upto 30 parts by weight of a polyoxyalkylene polyol. As described in the previous paragraph, the addition of at least 8 and preferably at least 10 parts by weight of the polyoxyalkylene polyol is preferred if the pressure sensitive adhesive is activated prior to adhering the substrate (s). The hydroxy functional material may further comprise one or more further hydroxy functional compounds and the total amount of hydroxy functional material in the preferred composition of the pressure sensitive adhesive layer is between 5 and 50 parts by weight.

The pressure-sensitive adhesive may additionally comprise various fillers, adjuvants, additives and the like such as silica, glass, clay, talc, pigments, colorants, glass beads or bubbles, glass or ceramic fibers, antioxidants, flame retardants and the like. Such compounds can perform various functions such as to reduce the weight or cost of the composition, adjust viscosity, and provide additional reinforcement. Fillers and the like which are capable of absorbing the radiation used during the curing process should be used in an amount that does not adversely affect the curing process. The amount of such additives may be between 0-50 wt.% and more preferably 0-15 wt.% with respect to the total mass of the epoxy component, amorphous and branched polyester, photoinitiator and optional hydroxy material.

It is preferred that the pressure-sensitive adhesive layer does not exhibit macroscopic phase separation. By macroscopic phase separation is meant that components of the pressure-sensitive adhesive tape migrate to the release liner protecting the exposed adhesive surfaces, and which results in a visible haze (detectable to an unaided human eye) on the release liner after it is removed from the pressure-sensitive adhesive tape.

Pressure sensitive adhesive transfer tapes (i.e. a pressure sensitive adhesive layer protected at both major surfaces by a release liner) comprising no backing can be obtained, for example, by mixing the epoxy containing material and the amorphous and branched polyester of the pressure sensitive adhesive and, if present, hydroxy functional material, additional fillers, adjuvants or other additives in a suitable glass vessel at elevated temperatures sufficient to liquidify the mixture. The mixture is then homogenized with a stirrer and one or more photoinitiators are added if needed. The resulting mixture is then coated with the desired thickness onto a first release liner such as a siliconized polyester film, and a second release liner is subsequently laminated onto the exposed surface of the d pressure-sensitive adhesive film. Adding the photoinitiator(s) shortly before coating avoids or minimizes a degradation of the photoinitiators and/or premature cationic polymerization. The method of preparation of pressure-sensitive adhesive transfer tapes outlined above merely illustrates the invention and other methods can be used.

Supported pressure-sensitive adhesive tapes comprise at least one backing. Depending on the respective application, the backing may be selected from a group of materials comprising polymeric films of various stiffness such as, for example, polyolefins, polyesters, polycarbonates or polymethacrylates, papers, non-wovens, one part mechanical fasteners (which are described, for example, in US 5,077,870) or metals. The thickness of the backing typically varies between 25 $\mu$m and 3,000 $\mu$m, preferably between 25 and 1,000 $\mu$m. The backing material should be selected such that the layers of the adhesive bond very strongly to it. Such a choice can be easily made through routine experimentation. If desired, the backing may be treated with chemical primers or may be corona treated.

The pressure-sensitive adhesive can be applied to the backing by coating the molten mixture of the pressure sensitive adhesive. It is also possible to laminate one or more adhesive transfer tapes as described above to the backing.

Because of its advantageous cohesive strength and debonding values, the pressure-sensitive adhesive used in the present invention allows for preparing pressure-sensitive adhesive transfer tapes. The pressure-sensitive adhesive transfer tapes can be used, for example, for assembling two substrates. The adhesive tape can be cut or die-cut to the desired geometrical shape and applied to the first substrate at room temperature using fingertip pressure or a suitable pressure-transferring device.

The curing reaction can be initiated, for example, by exposing the pressure-sensitive adhesive tape to actinic radiation (i.e., radiation having a spectrum in the UV or VIS spectral regions which at least partly overlaps the absorbence spectrum of the photoinitiator compounds) or electron beam radiation. Preferably, the energy is actinic radiation having a wavelength in the ultraviolet or visible spectral regions. Suitable sources of actinic radiation include for example mercury, xenon, carbon arc, tungsten filament lamps, sunlight and a laser such as an Argon ion laser etc. Ultraviolet radiation, especially from a medium pressure mercury arc lamp, is especially preferred. Preferred radiation sources have an essential part of their spectral output in the wavelength range from 200 - 600 nm, more preferably from 250 - 450 nm and most preferably from 300 - 450 nm. Exposure times may be from less than about 1 second to 10 minutes or more (to provide a total energy exposure of typically between 25 and 2,000 mJ/cm$^2$ of UV-A energy measured by an appropriate photo detection device such as those obtained from EIT (Sterling, Virginia) and calibrated according to N.I.S.T. (National Institute of Standards and Technology) standards) depending on both the amount and the type of reactants involved, the energy source, the distance from the energy source, the thickness of the adhesive tape and the open time.

The pressure-sensitive adhesive tapes may also be cured by exposure to electron beam radiation. The dosage necessary is generally from less than 1 megarad to 100 megarads or more. The rate of curing tends to increase with increasing amounts of initiator at a given energy exposure. The rate of curing also increases with increased energy intensity. When exposing the pressure sensitive adhesive composition to e-beam, it may not be necessary to include a photoinitiator into the composition to effect curing thereof.

Subsequent to the initiation of the cationic curing reaction the second substrate is adhered to the pressure-sensitive adhesive tapes using pressure within the open time. The open time is as defined above and determines the time during which the respective substrate can be reliably adhered to the curing pressure-sensitive adhesive surface of the adhesive tape. With increased curing of the pressure-sensitive adhesive the wet-out properties of the adhesive tape with respect to the surface decrease and the desired mechanical properties of the assembly such as high values of overlap shear strength and/or impact strength may not be obtained any longer. The open time depends on the dose and geometry of irradiation, the thickness of the pressure-sensitive adhesive tape, the substrates and the desired properties of the assembly. The open time may vary from 2 minutes up to 2 hours and is preferably between 2 and 15 minutes and more preferably between 2 and 5 minutes.

The pressure-sensitive adhesive tape may also be subjected to actinic and/or e-beam radiation prior to assembling it to the substrates thus initiating the cationic curing reaction prior to assembling. The actinic and/or e-beam radiation may be applied to one or both sides of the pressure-sensitive adhesive tape. Activating both sides of the pressure-sensitive adhesive tape results in more homogeneously cured pressure-sensitive adhesive tapes and is preferred. In case at least one of the substrates is transparent, for example, to UV radiation, curing can be initiated also after adhering the substrates to the pressure-sensitive adhesive tape by shining the UV light through the UV transparent substrate. If UV exposure is to only one side of the tape, it is preferred that the UV source has a substantial UV emission between 300 and 400 nm to best ensure uniform curing.

The pressure-sensitive adhesive tape according to the invention can be used for bonding a wide variety of substrates which may be selected from a group of materials consisting of glass, plastics, metals such as aluminium, ceramics and materials derived therefrom such as, for example, ceramic coated glass.

The assemblies according to the present invention are characterized by advantageous mechanical properties and, in particular, by high values of overlap shear strength and/or impact resistance as measured according to the test methods specified below. Assemblies of the present invention exhibiting an overlap shear strength at 23°C of at least 6 MPa combined with an overlap shear strength at 85°C of at least 1 MPa can be obtained. Preferred assemblies of the invention are those that have a dynamic overlap shear strength of at least 1.5 MPa at 85°C, preferably combined with a dynamic overlap shear strength of at least 7 MPa and more preferably at least 10 MPa at 23°C. The impact resistance is preferably at least 3.5 kJ/m$^2$ and more preferably at least 4 kJ/m$^2$.

The pressure-sensitive adhesive tapes of the present invention are useful for various applications such as, for example, bonding applications in the transportation, automotive, construction or electronic industries.

In a specific application a pressure-sensitive adhesive transfer tape of the present invention is used to adhere an attachment means to a windscreen which allows for easy adjusting of the windscreen when assembling it to the car body. The attachment means may comprise, for example, a stud, clip, strip or another fastener which is securely fastened or adhered to the windscreen by using a pressure-sensitive adhesive tape of the present invention. The other end of the attachment means is placed into predetermined points of the car body. In a specific embodiment, the other end of the attachment means may pass through a hole in the car body where it is mechanically fastened, for example, by applying a nut to the attachment means or it may be held in place by gravity and friction. Specific geometries of the attachment means can be taken, for example, from US 5,475,956. The attachment means may comprise various materials such as, for example, metals such as brass, bronze, aluminium or steel, and plastics such as PMMA (polymethylmethacrylate), polystyrene, polyamide, polycarbonate, polyester or other rigid and moderately polar plastics. In a particularly preferred embodiment, the attachment means is an injection molded pin having a base member approximately 2-3 cm in diameter, and a cylindrically shaped positioning member essentially 2-3 cm long and 0.5-1 cm in diameter, which is perpendicular to the base. The pin is preferably made from PMMA or polyamide. A UV-cross-linkable pressure-sensitive adhesive transfer tape, is unwound from a roll, preferably in form of die-cuts, and subjected to UV radiation. The first release liner is removed, and the activated pressure-sensitive adhesive tape is attached to the rear surface of the pin. After removal of the second release liner the pin is attached to a predetermined position on the windscreen.

The pressure-sensitive adhesive tape may also be used for adhering oven brackets, for structural members or architectural configurations or for bonding integrated circuit chips in electronic industry.

The invention is further illustrated by the following, non-limiting examples. First, however, certain procedures and tests utilized in the examples, will be described.

<u>Test methods for the uncured pressure-sensitive adhesive tapes:</u>

<u>Cold Flow Test (Qualitative)</u>

Adhesive tapes were prepared between two siliconized polyester liners. The adhesive sheet having a width of ca. 250 mm were placed in a controlled environment at 23°C and 50% relative humidity for three days. The edges of the sheets were then visually examined for evidence of cold flow. The materials were rated between 1 and 3 according to the following:

1 = No cold flow visible. Edges of adhesive mass remained straight and corners sharp.
2 = moderate cold flow visible.
3 = high degree of cold flow visible.

Peel Adhesion (90°)

Peel adhesion was measured according to FINAT TEST METHOD NO. 2 using a tensile tester and a jig which keep the sample at a 90° angle during removal from the test substrate. The equipment configuration is described in the method, available from Federation Internationale des Fabricatants Europeens et Transformateurs d'Adhesifs et Thermocollants ser Papiers et autres Supports (FINAT) and is based on a tensile tester adapted to provide the 90° peel capability.

There were several exceptions to the test conditions described specifically in the FINAT No. 2 Method, however:

1) FINAT 2 requires a glass substrate which was replaced by a stainless steel plate, cleaned as described below
2) a "standard FINAT test roller" was replaced by a 6.8 kg roller
3) the dwell time before peeling was 1 min (FINAT requires dwell times of 20 min and 24 hrs, respectively).

A stainless steel plate measuring 160 mm x 50 mm was cleaned with methylethylketone (MEK), then diacetone alcohol and finally heptane and allowed to air dry.

One liner was removed from a test specimen measuring 160 mm x 12.7 mm. The exposed adhesive face was applied to the steel plate and pressed on lightly by hand. The second liner was then removed and a 15 mm wide strip of aluminium foil (one side anodized, 127 microns thick, available from Lawrence & Frederick Inc, Streamwood IL, USA) was placed over the adhesive face with the anodized side contacting the adhesive. The aluminium foil covering was then rolled down onto the tape specimen twice using a mechanically driven metal roller having a weight of 6.8 kg.

After a dwell time of 1 min, the 90° peel adhesion test was performed using a peel speed of 100 mm/min. Each material was evaluated three times and the results averaged. Test data was recorded in units of N / 12.7 mm

Test methods for the cured pressure-sensitive adhesive tapes:

Overlap Shear Test

A modified version of ISO 4587 was employed. Aluminium coupons (100 mm x 25 mm x 2 mm) were subjected to light abrasion with a Scotchbrite™ NO. 7447 (TM) scrubbing pad (available from 3M Company) followed by a dilute aqueous soap solution and finally cleaned with isopropanol.

The assemblies were prepared by removing one of the two protective liners from the strip of tape measuring 1.27 cm x 2.54 cm as generated in the examples. The exposed adhesive face was then applied to the surface of one aluminium coupon by hand with light thumb pressure. The second protective liner was then removed. The exposed adhesive face was then irradiated with 1640 mJ/cm$^2$ of UV-A radiation emitted from a hand-held lamp available as UVAHAND™ 250 lamp from Dr. Hoenle GmbH (Planegg, Germany). The amount of energy used to irradiate the adhesive face was measured using a UVI MAP (TM) UV and Temperature Measuring/Plotting System, Model UM365H-S (Electronic Instrumentation Technology Inc., Sterling Virginia, USA) designed to measure UV-A radiation in the range of 320-390 nm. The device was calibrated according to N. I. S. T. Standards (National Institute of Standards and Technology).

One minute was allowed to pass after the UV irradiation process. Then the second aluminium test plate (unheated) was applied to the irradiated adhesive face in such a fashion as to prepare a bond suitable for overlap shear testing.

The bonded assemblies were placed in a platen press and subjected to a force of 150 N for 10 sec. The assemblies were then allowed to rest at 23°C at 50 % relative humidity for seven days before testing. During the seven day conditioning the assemblies were supported in such a manner that no stress was placed on the bond during the extended curing stage.

Overlap Shear Measurements

A dynamic overlap shear test was performed at 23° C on the assemblies comprising aluminium/adhesive/ aluminium prepared as described above. The test method deviated from the standard method in that the cross-head speed was 5 mm/min. The test was repeated three times for each sample and the average value recorded in MPa.

The test was also performed at elevated temperature (85°C) by placing the bonded sample assembly and the jaws of the tensile tester in a forced air oven especially designed to function in conjunction with tensile testing equipment.

Impact Test

The impact test was performed according ASTM (American Society of Testing and Materials, Philadelphia, PA/USA) D 950- 82. The two bonding substrates were made of 2024 T3 aluminium, having the dimensions:

plate 1) 25 mm x 25 mm x 8 mm and
plate 2) 35 mm x 25 mm x 8 mm

A bonding area of 625 mm$^2$ was employed.

The surface of aluminium substrates was prepared according to the optimized FLP etching method described in DIN (Deutsche Industrie Norm) 53281.

A sample of uncured tape having approximately the same dimensions as the first, smaller substrate 1 was applied to smaller substrate 1 and pressed on lightly by hand. Then the liner was removed and the exposed adhesive side was then irradiated with 1640mJ/cm$^2$ of UV A radiation using the equipment described under Overlap Shear Test (Part A) above. The substrate was not preheated.

After 1 minute dwell time, the larger substrate 2 was applied to the irradiated adhesive side, in such a fashion, as to prepare a bond suitable for impact testing. The bonded assemblies were placed in a platen press at 23°C and subjected to a pressure of 4 bar for 15 s. The assemblies were then allowed to rest at 23°C, 50% relative humidity for seven days before testing.

The determination of impact value was carried out with an impact tester (available as model TYPE 5101 from Zwick GmbH & Co., Ulm, Germany), where an Izod pendulum having a 50 Joule energy impacted the one of the aluminium plates while the other was held stationary. The impact speed was 3.85 m/s and was directed at the test construction in such a way as to exert a shearing force on the adhesive bond. Four specimens were tested and the average data in Joules were recorded. The values were then converted into kJ/m$^2$.

Materials

Glass transition temperature of the DYNAPOL™ polyesters hereinafter cited, is the glass transition as determined by differential scanning calorimetry according to the DIN 53765 85 ml/g, polydispersity ($\rho$) = $M_w$ / $M_n$ = 3.3 , commercially available from Huels AG (Creanova Specialties), Marl, Germany.

**DYNAPOL™ S 1427** - amorphous branched copolyester, $T_g$ = 28° C, softening point $T_s$ = 143 °C, OH value > 5, viscosity number = 89 ml/g, polydispersity = 6.4, commercially available from Huels AG (Creanova Specialties), Marl, Germany.

**DYNAPOL™ S 1422** - hydroxy functional, amorphous branched copolyester, $T_g$ = -5°C available from Huels AG (Creanova Specialties), Marl, Germany.

**DYNAPOL™ S 1421** - amorphous linear copolyester, $T_g$ = -4° C, softening point $T_s$ = 80° C, OH value >3, viscosity number = 87 ml/g, polydispersity ($\rho$) = $M_w$ / $M_n$ = 3.1, commercially available from Huels AG (Creanova Specialties), Marl, Germany.

Epoxy resins

DER™ 331 - epoxy equivalent weight ca. 187, liquid at room temperature and atmospheric pressure, commercially available from Dow Chemical Comp. Midland, MI EPON™ 1001 - epoxy equivalent weight ca. 515, solid at room temperature and atmospheric pressure, commercially available from Shell Chemical.

Hydroxyfunctional compounds

PAPHEN™ PKHP-200 - micronized phenoxy resin, having a number average molecular weight ($M_N$) 10,000 - 16,000, hydroxy equivalent weight 284, solid at room temperature and atmospheric pressure, available from Phenoxy Associates (Rock Hill, SC/USA).

VORANOL™ 230-238 - polyol adduct of glycol and propylene oxide having a hydroxyl number of 38, molecular weight ($M_n$) of 700, liquid at room temperature and atmospheric pressure, commercially available from Dow Chemical, Midland, MI/USA.

Cationic Photoinitiator

UVOX™ UVI 6974, triarylsulfonium complex salt, commercially available from Union Carbide, Danbury, CT/ USA.

Examples

The polyester component, the epoxy component and the hydoxyl-functional component as specified in Table 1 were combined in a closed glass container and placed in a forced air oven for 2 hours at 165°. The resulting mixture was stirred periodically by hand until a homogeneous mixture was obtained. The photoinitiator component was then added and the mixture was again stirred until the photoinitiator dissolved.

The resulting liquid mixture was then poured between two siliconized polyester (polyethyleneterephthalate) liners which had been previously threaded into a heated knife coater. The knife coater had a bed temperature of 100° C and the knife was preheated in a forced air oven to 120° C before coating. Hot knife coating resulted in a pressure-sensitive adhesive transfer tape with a thickness of ca. 350 microns between the polyester release liners.

In tapes of the invention containing PAPHEN™ phenoxy resin, the phenoxy resin was mixed with the two epoxy resins (EPON™ 1001 and DER™ 331) and VORANOL™, heated to 160° C until the phenoxy resin was dissolved. The other components were then added and the mixture stirred until it was homogeneous.

The unsupported, uncured adhesive tapes were tested according to the test methods specified above and the results obtained were summarized in Table 2 .

Separately, adhesive tapes were activated with UV light and then used to prepare bonded assemblies as described in the test methods. After UV activation and subsequent curing of the adhesive bonds at ambient temperatures, tests were carried out on the bonded assemblies. Results of these tests are also summarized in Table 2.

Table 1 Compositions

| Ex. | Polyester type | Polyester, pbw | EPON™ 1001, pbw | DER™ 331, pbw | Voranol™ pbw | Paphen™ pbw | UVOX™, pbw |
|---|---|---|---|---|---|---|---|
| 1 | Dynapol™ S 1422 | 30 | 22 | 27 | 10 | 10 | 1 |
| 2 | Dynapol™ S 1422 | 40 | 22 | 27 | 10 | ---- | 1 |
| 3 | Dynapol™ S 1422 | 30 | 22 | 27 | 10 | 15 | 1 |
| 4 | Dynapol™ S 1422 | 35 | 22 | 27 | 10 | 5 | 1 |
| 5 | Dynapol™ S 1422 | 25 | 22 | 27 | 10 | 10 | 1 |
| 6 | Dynapol™ S 1422 | 30 | 22 | 27 | 5 | 10 | 1 |
| 7 | Dynapol™ S 1422 | 30 | 22 | 27 | 10 | --- | 1 |
| C1 | Dynapol™ S 1427 | 40 | 22 | 27 | 10 | --- | 1 |
| C2 | Dynapol™ S 1427 | 30 | 22 | 27 | 10 | --- | 1 |
| C3 | Dynapol™ S 1427 | 30 | 22 | 27 | 10 | 10 | 1 |
| C4 | Dynapol™ S 1313 | 40 | 22 | 27 | 10 | ---- | 1 |
| C5 | Dynapol™ S 1313 | 40 | 39 | 5 | 15 | --- | 1 |
| C6 | NONE | ---- | 22 | 27 | 10 | 30 | 1 |
| C7 | Dynapol™ S 1313 | 30 | 22 | 27 | 10 | 10 | 1 |

Table 1 Compositions   (continued)

| Ex. | Polyester type | Polyester, pbw | EPON™ 1001, pbw | DER™ 331, pbw | Voranol™ pbw | Paphen™ pbw | UVOX™, pbw |
|-----|----------------|----------------|------------------|---------------|--------------|-------------|------------|
| C8 | Dynapol™ S 1421 | 40 | 22 | 27 | 10 | ---- | 1 |
| | pbw= parts by weight | | | | | | |

Table 2

| | Properties | | | | |
|--|------------|--|--|--|--|
| Example | UNCURED TAPES | | CURED TAPES | | |
| | Peel adhesion, N/ 12.7 mm | Cold Flow, 1-3 | Overlap shear, 23° C, MPa | Overlap shear, 85° C, MPa | Impact test, kJ/m$^2$ |
| 1 | 26.4 | 2 | 16.2 | 2.8 | 7.4 |
| 2 | 7.8 | 3 | 17.2 | 1.7 | 8.2 |
| 3 | 14.5 | 2 | 12.5 | 2.2 | 4.6 |
| 4 | 13.5 | 3 | 6.8 | 2.0 | 12.5 |
| 5 | 20.9 | 2 | 17.9 | 1.8 | 4.6 |
| 6 | 26.1 | 2 | 8.8 | 1.0 | 3.9 |
| 7 | 14.5 | 3 | 15.7 | 1.8 | 4.3 |
| C1 | 4.6 | 2 | 5.6 | 0.9 | 1.6 |
| C2 | 20.1 | 2 | 8.1 | 1.4 | 2.5 |
| C3 | 10.6 | 1 | 11.9 | 1.4 | 2.1 |
| C4 | 8.9 | 3 | 12.8 | 1.1 | 8.6 |
| C5 | 12.0 | 2 | 10.4 | 0.6 | 3.1 |
| C6 | 12.5 | 1 | 4.2 | 3.8 | --- |
| C7 | 36.7 | 2 | 10.6 | 0.8 | --- |
| C8 | N/A* | 3 | 11.9 | 0.3 | --- |

Cold flow: 1 = low cold flow, 2 = moderate cold flow, 3 = high degree of cold flow
* not applicable, the sample is paste like and showed cohesive failure in the 90° peel adhesion test

As can be seen from the above table, the invention samples have good to excellent dynamic overlap shear strengths at room temperature and at elevated temperature combined with high impact test values. This renders the adhesive tapes of the present invention suitable for certain demanding applications for which the comparative adhesive tape may be less suited although the comparative tapes may suffice in many other applications.

## Claims

1.   Pressure sensitive adhesive tape comprising at least one pressure sensitive adhesive layer, said pressure sensitive adhesive layer is capable of being cured upon exposure to actinic radiation or electron beam radiation and comprises:

   (i) an epoxy containing material;
   (ii) an amorphous and branched polyester having a glass transition temperature of not more than 10°C;
   (iii) and an effective amount of a photoinitiator when needed to initiate the curing.

2.   Pressure sensitive adhesive tape according to claim 1 wherein the pressure sensitive adhesive layer comprises

(i) between 20 and 70 parts by weight of said epoxy containing material,
(ii) between 10 and 75 parts by weight of said amorphous and branched polyester and
(iii) between 5 and 50 parts by weight of a hydroxy functional material and

wherein the sum of total amount of components (i), (ii) and (iii) equals 100 parts by weight.

3. Pressure sensitive adhesive tape according to claim 2 wherein said hydroxy functional material further comprises a phenoxy resin having hydroxy functionality.

4. Pressure sensitive adhesive tape according to claim 3 wherein said phenoxy resin is derived from a polymerization of a di-glycidyl bisphenol compound.

5. Pressure sensitive adhesive tape according to any of the previous claims wherein said pressure sensitive adhesive tape has an open time of at least two minutes.

6. Pressure sensitive adhesive tape according to claim 2 or 3 wherein the hydroxy functional material comprises a polyoxyalkylene polyol.

7. Pressure sensitive adhesive tape according to claim 2 wherein said hydroxy functional material comprises:

   (a) 5 to 30 parts by weight of a phenoxy resin having hydroxy functionality;
   (b) 0 to 30 parts by weight of a polyoxyalkylene polyol;
   (c) optionally one or more further hydroxy functional compounds;

and the sum of the total amount of components (a), (b) and (c) is between 5 and 50 parts by weight.

8. Pressure sensitive adhesive tape according to claim 2 wherein the pressure sensitive adhesive layer comprises between 10 and 72 parts by weight of said amorphous and branched polyester and between 8 and 50 parts by weight of a hydroxy functional material comprising:

   (a) 0 to 30 parts by weight of a phenoxy resin having hydroxy functionality;
   (b) 8 to 30 parts by weight of a polyoxyalkylene polyol;
   (c) optionally one or more further hydroxy functional compounds;

and the sum of the total amount of components (a), (b) and (c) is between 8 and 50 parts by weight.

9. Method of bonding a first substrate to a second substrate comprising the steps of:

   (i) applying a first exposed surface of the pressure sensitive adhesive layer of the pressure sensitive adhesive tape as defined in any of claims 1 to 8 to the first substrate,
   (ii) attaching the second substrate to a second exposed surface of the pressure sensitive adhesive layer and
   (iii) exposing the pressure sensitive adhesive layer to actinic radiation or electron beam radiation.

10. Method according to claim 9 wherein said exposure to actinic radiation or electron beam radiation is effected prior to attaching the second substrate to the second exposed surface of the pressure sensitive adhesive layer.

11. Method according to claim 9 wherein at least one of said first and second substrate is translucent for actinic radiation or electron beam radiation and wherein said exposure to said actinic radiation or electron beam is effected through the translucent substrate after attaching the second substrate to the second exposed surface of the pressure sensitive adhesive layer.

12. Method according to any of claims 9 to 11 wherein the first and second substrate are independently selected from a group comprising glass, metal, plastic and ceramics.

13. Assembly comprising a first substrate bonded to a second substrate with a cured product of a composition comprising an epoxy material and an amorphous and branched polyester, the assembly having a dynamic overlap shear strength at 23°C of at least 6 MPa and at least 1 MPa at 85°C and said assembly further having an impact test value of at least 3.5 kJ/m$^2$.

**14.** A pressure sensitive adhesive capable of being cured upon exposure to actinic radiation or electron beam radiation and comprises:

(i) an epoxy containing material;
(ii) an amorphous and branched polyester having a glass transition temperature of not more than 10°C;
(iii) and an effective amount of a photoinitiator when needed to initiate the curing.

**15.** A pressure sensitive adhesive according to claim 14 wherein the pressure sensitive adhesive comprises

(i) between 20 and 70 parts by weight of said epoxy containing material,
(ii) between 10 and 75 parts by weight of said amorphous and branched polyester and
(iii) between 5 and 50 parts by weight of a hydroxy functional material and

wherein the sum of total amount of components (i), (ii) and (iii) equals 100 parts by weight.

**16.** Pressure sensitive adhesive according to claim 15 wherein said hydroxy functional material further comprises a phenoxy resin having hydroxy functionality.

**17.** Pressure sensitive adhesive according to claim 15 or 16 wherein the hydroxy functional material comprises a polyoxyalkylene polyol.

**18.** Pressure sensitive adhesive according to claim 15 wherein said hydroxy functional material comprises:

(a) 5 to 30 parts by weight of a phenoxy resin having hydroxy functionality;
(b) 0 to 30 parts by weight of a polyoxyalkylene polyol;
(c) optionally one or more further hydroxy functional compounds;

and the sum of the total amount of components (a), (b) and (c) is between 5 and 50 parts by weight.

**19.** Pressure sensitive adhesive according to claim 15 wherein the pressure sensitive adhesive comprises between 10 and 72 parts by weight of said amorphous and branched polyester and between 8 and 50 parts by weight of a hydroxy functional material comprising:

(a) 0 to 30 parts by weight of a phenoxy resin having hydroxy functionality;
(b) 8 to 30 parts by weight of a polyoxyalkylene polyol;
(c) optionally one or more further hydroxy functional compounds;

and the sum of the total amount of components (a), (b) and (c) is between 8 and 50 parts by weight.

**European Patent Office**

## EUROPEAN SEARCH REPORT

Application Number

EP 99 20 0332

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| D,Y | WO 98 38262 A (BENNETT GREGGORY S ;HITSCHMANN GUIDO (DE); LAMON ALAIN (FR); GEORG) 3 September 1998 <br> * the whole document * <br> --- | 1-3,5,6, 9-17 | C09J163/00 C09J167/00 C09J7/02 C09J7/00 C09J5/00 |
| X <br> Y | NL 9 400 679 A (TNO) 1 December 1995 <br> * abstract * <br><br> * page 2, line 5 - line 26 * <br> * page 3, line 9 - line 19 * <br> * example * <br> --- | 1,14 <br> 1-3,5,6, 9-17 | |
| D,A | EP 0 620 259 A (MINNESOTA MINING & MFG) 19 October 1994 <br> * the whole document * <br> ----- | 1-5,9-17 | |

TECHNICAL FIELDS
SEARCHED (Int.Cl.6)

C09J

The present search report has been drawn up for all claims

| Place of search | Date of completion of the search | Examiner |
|---|---|---|
| THE HAGUE | 21 June 1999 | Schlicke, B |

EPO FORM 1503 03.82 (P04C01)

**EP 1 026 218 A1**

**ANNEX TO THE EUROPEAN SEARCH REPORT
ON EUROPEAN PATENT APPLICATION NO.**            EP 99 20 0332

This annex lists the patent family members relating to the patent documents cited in the above-mentioned European search report.
The members are as contained in the European Patent Office EDP file on
The European Patent Office is in no way liable for these particulars which are merely given for the purpose of information.

21-06-1999

| Patent document cited in search report | | Publication date | Patent family member(s) | | Publication date |
|---|---|---|---|---|---|
| WO 9838262 | A | 03-09-1998 | AU | 2060297 A | 18-09-1998 |
| NL 9400679 | A | 01-12-1995 | NONE | | |
| EP 0620259 | A | 19-10-1994 | CA | 2115888 A | 16-10-1994 |
| | | | JP | 6306346 A | 01-11-1994 |

EPO FORM P0459

For more details about this annex : see Official Journal of the European Patent Office, No. 12/82

18